# EUROPEAN PATENT APPLICATION

(11) **EP 4 749 324 A1**
(43) Date of publication of application: **27.05.2026**
(21) Application number: 24843020.9
(22) Date of filing: 09.07.2024
(51) Int. Cl.: G01S 7/481, G02B 26/10

(54) **RANGE FINDING DEVICE**

(30) Priority: 18.07.2023 JP 2023116539
(71) Applicant: DENSO CORPORATION, Kariya-city, Aichi 448-8661 (JP)
(72) Inventor: IMAI Tsuyoshi, Kariya-city, Aichi 448-8661 (JP); TOMITA Shodai, Kariya-city, Aichi 448-8661 (JP); HAMADA Kazuaki, Kariya-city, Aichi 448-8661 (JP)
(74) Representative: Kuhnen & Wacker Patent- und Rechtsanwaltsbüro PartG mbB
(86) International application number: PCT/JP2024/024793
(87) International publication number: WO 2025/018228

(57) **Abstract**

A ranging device (1) is a device for measurement of a distance to an object by scanning an outside with light and detecting light reflected from the object. The ranging device includes an oscillation shaft (13) driven by an actuator (50), a mirror (18) that is driven and oscillated by the actuator (50) to scan the outside with light, and a holder (21, 22, 23, 24, 25, 26, 27, 28). The holder (21, 22, 23, 24, 25, 26, 27, 28) includes a shaft holding portion (31) including a hole portion (311) into which the oscillation shaft (13) is press-fitted, and a mirror holding portion (32, 33) that is integrally formed with the shaft holding portion (31). The mirror (18) is adhered to the mirror holding portion (32, 33) via an adhesive member (29). The mirror holding portion (32, 33) includes a mirror contact portion (41, 42, 43, 44, 45, 46, 47, 48) that protrudes toward the mirror (18) and is in contact with the mirror (18).

## Description

### CROSS REFERENCE TO RELATED APPLICATION

This application is based on Japanese Patent Application No. 2023-116539, filed on July 18, 2023. The entire disclosure of the application is incorporated herein by reference.

### TECHNICAL FIELD

The present disclosure relates to a ranging device.

### BACKGROUND ART

Conventionally, a ranging device is known, which emits a transmission wave and detects the reflected wave from an object to determine a distance to the object, for example. A light scanning device is used in the ranging device, and the light scanning device described in Patent Literature 1 performs scanning with light by reciprocally rotating a mirror.

### PRIOR ART LITERATURE

### PATENT LITERATURE

Patent Literature 1: JP 2021-096295 A

### SUMMARY OF THE INVENTION

In Patent Literature 1, a plate-shaped mirror is mounted on a surface of a substrate. Here, when fixing the mirror to a holding member such as the substrate by using a material for adhesion, such as an adhesive or double-sided tape, it is difficult to adjust a thickness of the material, and variations in the thickness may affect ranging accuracy. An object of the present disclosure is to provide a ranging device capable of reducing variations in position of a mirror surface.

A ranging device of the present disclosure is a device for measurement of a distance to an object by scanning an outside with light and detecting light reflected from the object. The ranging device includes an oscillation shaft driven by an actuator, a mirror that is driven and oscillated by the actuator to scan the outside with the light, and a holder.

The holder has a shaft holding portion that includes a hole portion into which the oscillation shaft is press-fitted, and a mirror holding portion integrally formed with the shaft holding portion and adhered to the mirror via an adhesive member. The mirror holding portion includes a mirror contact portion that protrudes toward the mirror and is into contact with the mirror. As a result, variations in position of the mirror surface can be reduced.

### BRIEF DESCRIPTION OF DRAWINGS

The above and other objectives, features and advantages of the present disclosure will become more apparent from the following detailed description with reference to the accompanying drawings.
FIG. 1 is a cross-sectional view showing an oscillation actuator of a ranging device according to a first embodiment.
FIG. 2 is a perspective view showing a spindle, a holder, and a mirror according to the first embodiment.
FIG. 3 is a planar view showing the holder according to the first embodiment.
FIG. 4 is a view in the IV direction of FIG. 3.
FIG. 5 is an enlarged view of the part V in FIG. 4.
FIG. 6 is a planar view showing a holder according to a second embodiment.
FIG. 7 is a planar view showing a holder according to a third embodiment.
FIG. 8 is a planar view showing a holder according to a fourth embodiment.
FIG. 9 is a planar view showing a holder according to a fifth embodiment.
FIG. 10 is a view in the X direction of FIG. 9.
FIG. 11 is a planar view showing a holder according to a sixth embodiment.
FIG. 12 is a view in the XII direction of FIG. 11.
FIG. 13 is a planar view showing a holder according to a seventh embodiment.
FIG. 14 is a view in the XIV direction of FIG. 13.
FIG. 15 is a planar view showing a holder according to an eighth embodiment.
FIG. 16 is a view in the XVI direction of FIG. 15.
FIG. 17 is a schematic view showing a ranging device according to the embodiments.

### EMBODIMENTS FOR CARRYING OUT THE INVENTION

Hereinafter, a ranging device according to the present disclosure will be described with reference to the drawings. Hereinafter, in multiple embodiments, the substantially same elements are denoted by the same reference signs, and the description thereof is omitted.

### (First Embodiment)

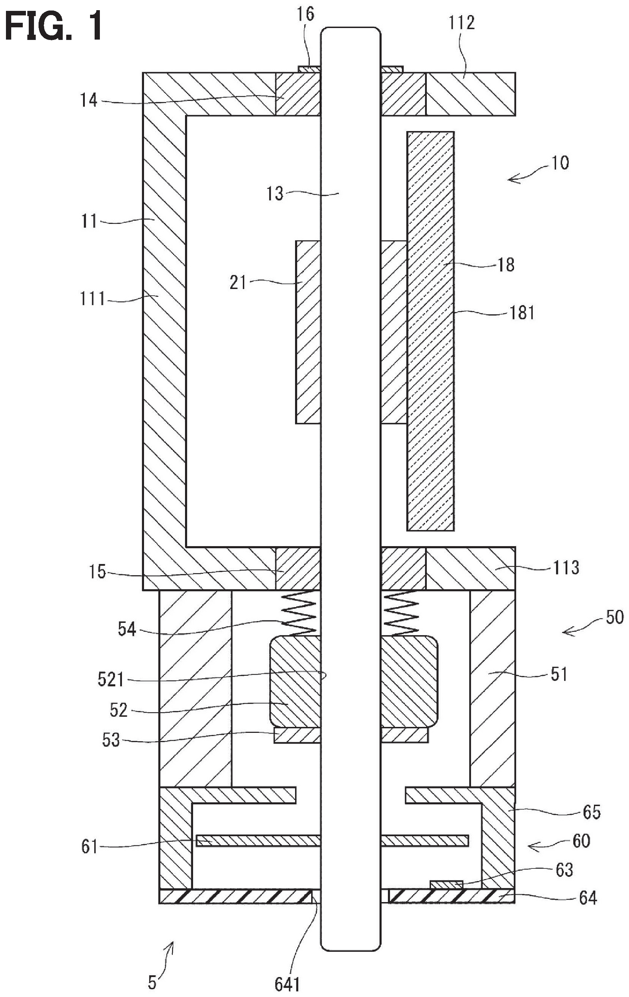

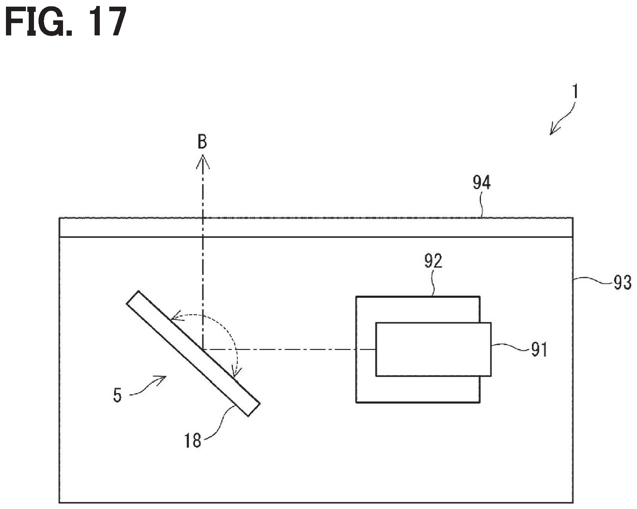

A first embodiment is shown in FIGS. 1 to 5. In addition, a schematic configuration of a ranging device is shown in FIG. 17. As shown in FIG. 17, the ranging device 1 is a LiDAR (Light Detection and Ranging) device that measures a distance to an object by emitting a light and detecting the light reflected from the object irradiated with the emitted light. The ranging device 1 is mounted, for example, on a vehicle and is used to detect objects in front of the vehicle.

The ranging device 1 includes a light emitting unit 91, a light receiving unit 92, and an oscillation actuator 5, which are housed within a housing 93. The light emitting unit 91 intermittently emits a light beam B. The emitted light beam B is reflected by a mirror 18 that is driven to oscillate, and is emitted to an outside through an optical window 94. The light receiving unit 92 receives light reflected from an object that has been irradiated with the light beam B. The light detected by the light receiving unit 92 is converted into an electrical signal, which is used to calculate the distance to the object.

As shown in FIG. 1, the oscillation actuator 5 includes a mirror unit 10, an oscillation motor 50, and an encoder 60. The mirror unit 10 includes a base 11, a spindle 13, the mirror 18, and a holder 21. The base 11 has a mounting portion 111 and retaining walls 112 and 113, and is formed integrally, for example, from metal. The mounting portion 111 is fixed to the housing 93 with bolts or other members. The retaining walls 112 and 113 extend approximately perpendicular to the mounting portion 111 from both ends of the mounting portion 111.

The spindle 13 is arranged approximately parallel to the mounting portion 111 and is supported by bearings 14 and 15 provided in the retaining walls 112 and 113 so that the spindle 13 is rotatable relative to the base 11. The bearings 14 and 15 in the present embodiment are ball bearings, but may also be bearings other than ball bearings. The spindle 13 extends through the oscillation motor 50 and the encoder 60. Hereinafter, an axis of the spindle 13 will be referred to as an oscillation axis Ax, and a direction of the oscillation axis Ax will be simply referred to as an "axial direction" as appropriate. In addition, a position close to the oscillation axis Ax in the oscillation direction is referred to as an inner position, and a position far from the oscillation axis Ax in the oscillation direction is referred to as an outer position, in a configuration including the holder 21 and other components. An E-ring 16 is provided on an outer side of the bearing 14 in the axial direction and functions as a stopper to prevent the spindle 13 from coming out.

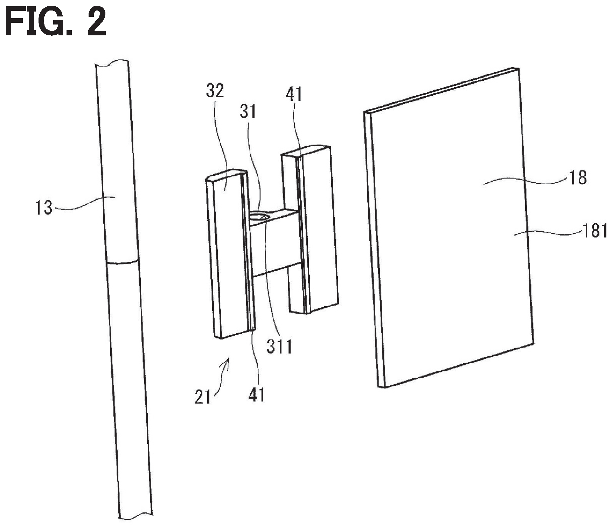

As shown in FIGS. 1 and 2, the mirror 18 has a flat-rectangular shape in planar view and is fixed to the holder 21 to be symmetrical with respect to the oscillation axis Ax. The mirror 18 may have a shape other than a rectangular shape as long as the mirror 18 is symmetrical with respect to the oscillation axis Ax. The holder 21 and the mirror 18 are arranged inside the base 11 such that a mirror surface 181 faces away from the mounting portion 111, and are driven to oscillate by the oscillation motor 50. The mirror 18 reflects the light beam B output from the light emitting unit 91 with the mirror surface 181, and directs the light beam B to the outside in a direction corresponding to an oscillated position of the mirror 18, thereby scanning the light beam B within a predetermined scanning range.

The holder 21 has a press-fit portion 31 and mirror holding portions 32, and is formed integrally, for example, from metal. The press-fit portion 31 includes a hole portion 311 through which the spindle 13 is inserted, and the spindle 13 is press-fitted and fixed in the hole portion 311. The press-fit portion 31 protrudes in a protruding direction away from the mirror 18 beyond the mirror holding portions 32. In other words, a plate thickness of each of the mirror holding portions 32 is smaller than that of the press-fit portion 31.

The mirror 18 is fixed by an adhesive or the like to mirror mounting surfaces of the mirror holding portions 32. The mirror mounting surfaces face in a direction opposite the protruding direction of the press-fit portion 31. The mirror holding portions 32 are formed symmetrically with respect to the oscillation axis Ax at opposite edges of the press-fit portion 31. As a result, inertia moments during oscillation can be made uniform in both directions. Lengths of the mirror holding portions 32 in the axial direction are longer than a length of the press-fit portion 31, and the holder 21 has a substantially H-shape in planar view as a whole. Since the length of the press-fit portion 31 in the axial direction is shorter than the lengths of the mirror holding portions 32, a weight of the holder 21 can be reduced and a mounting area for the mirror 18 can be secured. Details of mounting of the mirror 18 onto the holder 21 will be described later.

As shown in FIG. 1, the oscillation motor 50 is provided on one side of the mirror unit 10 in the axial direction. The oscillation motor 50 includes a stator 51, a rotor magnet 52, and a preload spring 54. The stator 51 is fixed to the retaining wall 113 with bolts or other fixing members. The stator 51 includes an electromagnetic coil and a fixed magnet (not shown).

The rotor magnet 52 has a cylindrical shape with a shaft hole 521 provided at its center position. The spindle 13 is inserted through the shaft hole 521. The rotor magnet 52 is fixed to the spindle 13 with a rotor fixing member 53. One end of the preload spring 54 is in contact with the bearing 15, and the other end is in contact with the rotor magnet 52.

The rotor magnet 52 is disposed inside the stator 51 and oscillates about its stationary position by the energized electromagnetic coil. Here, "oscillation" refers to a motion in which forward and reverse rotations are periodically repeated within a predetermined angular range of less than 360°. When a supply of current to the electromagnetic coil is turned off, the rotor magnet 52 returns to and remains at the stationary position by a magnetic force of the fixed magnet.

The encoder 60 includes a disk 61 and a detecting element 63, all of which are housed in a case 65. The disk 61 is fixed to a disk hub (not shown) that is press-fitted and fixed to a side of the spindle 13 facing the encoder 60, and rotates integrally with the spindle 13. The detecting element 63 is mounted on a substrate 64 and detects a rotational position of the disk 61. As a result, the encoder 60 is capable of detecting the oscillated position of the oscillation motor 50 and the mirror 18. The substrate 64 includes a through hole 641 through which the spindle 13 is inserted.

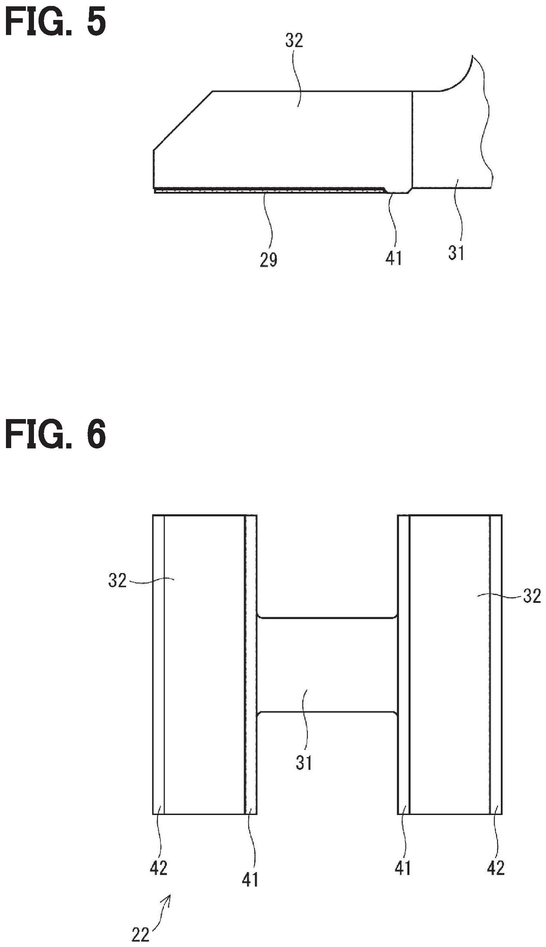

In the present embodiment, the mirror 18 is fixed to the holder 21 using an adhesive member 29 (refer to FIG. 5), such as an adhesive or double-sided tape. When fixing the mirror 18 using the adhesive member 29, it is difficult to adjust a thickness of the adhesive member 29, which may result in variations in a distance between the mirror surface 181 and the spindle 13.

In addition, when press-fitting the spindle 13 into the hole portion 311 of the holder 21, the press-fit portion 31 may expand toward the mirror 18. When the holder 21 expands due to press-fitting, a surface accuracy of the mirror mounting surface may degrade, which may result in the variations in the distance between the mirror surface 181 and the spindle 13. The variations in the distance between the mirror surface 181 and the spindle 13 may affect the distance measurement accuracy.

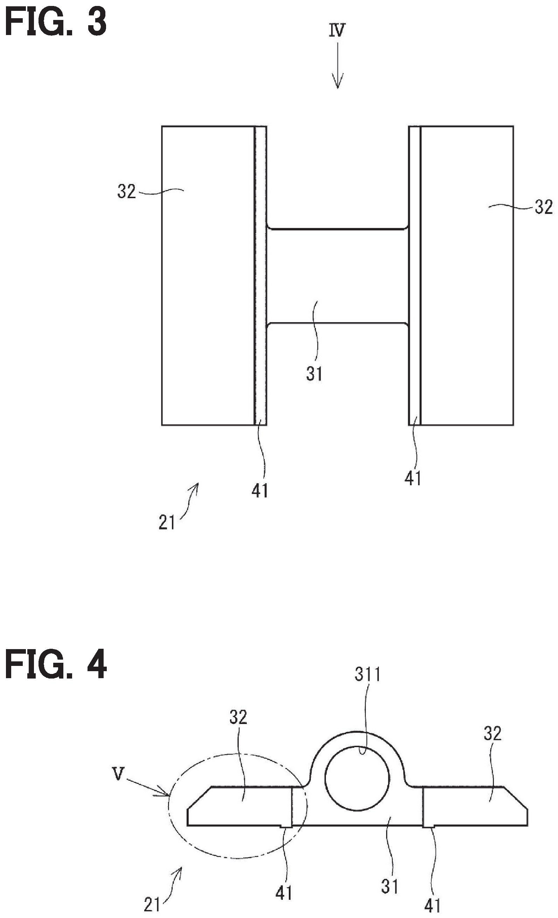

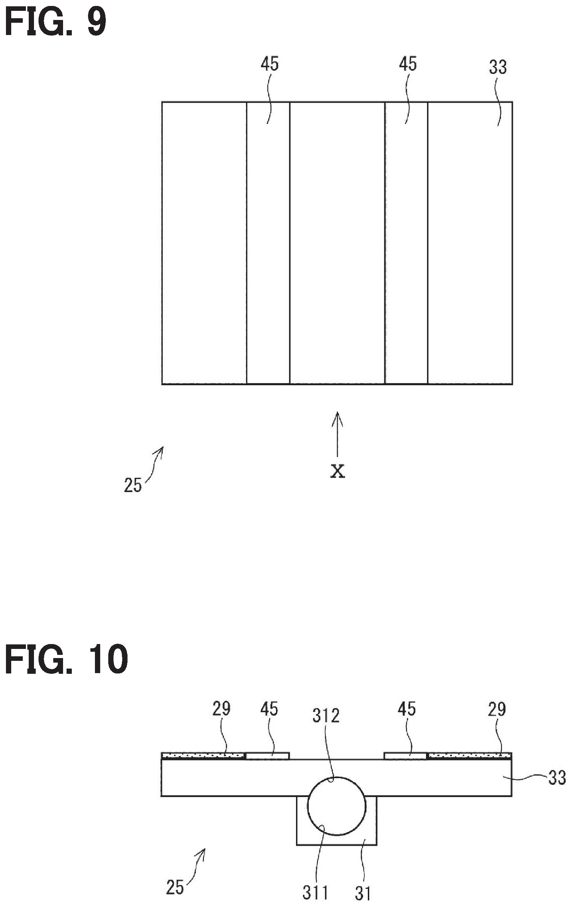

Thus, as shown in FIGS. 3 to 5, the holder 21 has mirror contact portions 41 protruding from a surface of the holder 21 facing the mirror 18 and being in contact with the mirror 18 at end surfaces of the mirror contact portions 41. In the present embodiment, the mirror contact portions 41 extend in the axial direction along edge portions of the mirror holding portions 32 facing the press-fit portion 31. A protrusion height of each of the mirror contact portions 41 is set to a height (for example, about 0.1 mm) that ensures necessary mounting strength during attaching the mirror with the adhesive member 29. The adhesive member 29 is provided outward of the mirror contact portions 41 in the oscillation direction, and the mirror 18 is adhered to the holder 21 via the adhesive member 29. A thickness of the adhesive member 29 is adjusted by the mirror contact portions 41 in contact with the mirror 18. In FIG. 5, the adhesive member 29 is illustrated using dot hatching for ease of explanation. In FIG. 10 and other drawings, the adhesive member 29 is also illustrated using dot hatching for ease of explanation, similarly to FIG. 5.

Furthermore, the mirror contact portions 41 serve as regulating walls that prevent the adhesive member 29 from flowing toward the press-fit portion 31 since the mirror contact portions 41 is formed at the edge portions of the mirror holding portions 32 facing the press-fit portion 31. The holder 21 and the mirror 18 are in contact with each other at the mirror contact portions 41 and are bonded together at the mirror holding portions 32 provided outward of the press-fit portion 31, thereby defining a gap between the press-fit portion 31 and the mirror 18. As a result, even when deformation occurs in the press-fit portion 31 due to press-fitting of the spindle 13, expansion of the press-fit portion 31 is absorbed by the gap, thereby preventing interference of the press-fit portion 31 with the mirror 18. Thus, the variations in distance between the mirror surface 181 and the spindle 13 can be reduced, thereby ensuring distance measurement accuracy.

As described above, the ranging device 1 scans the outside with the light and measures the distance to the object by detecting the light reflected from the object. The ranging device 1 includes the spindle 13 driven by the oscillation motor 50, the mirror 18 that is driven to oscillate by the oscillation motor 50 to scan the outside with the light, and the holder 21.

The holder 21 includes the press-fit portion 31 including the hole portion 311 into which press the spindle 13 is press-fitted, and the mirror holding portion 32s that are integrally formed with the press-fit portion 31. The mirror 18 is affixed to the mirror holding portions 32 via the adhesive member 29. The mirror contact portions 41 are formed on the mirror holding portions 32, protrude toward the mirror 18, and are in contact with the mirror 18.

In the present embodiment, the protruding mirror contact portions 41 are formed on the mirror mounting surfaces of the mirror holding portions 32, and the holder 21 and the mirror 18 are in contact with each other at the mirror contact portions 41 without the adhesive member 29, which can reduce variations in distance between the mirror surface 181 and the oscillation axis Ax. Furthermore, since the mirror contact portions 41 are formed at positions other than the press-fit portion 31, degradation in a surface accuracy of the mirror surface 181 due to deformation of the press-fit portion 31 caused by press-fitting the spindle 13 can be reduced. As a result, positional accuracy of the mirror surface 181 can be ensured, thereby improving the distance measurement accuracy.

The press-fit portion 31 and the mirror holding portion 32 are separated into different regions by the mirror contact portions 41. The mirror 18 is fixed to the holder 21 by the adhesive member 29 applied on the mirror holding portions 32, and is spaced apart from the press-fit portion 31. Since the adhesive member 29 is not applied on the press-fit portion 31, influence of the thickness of the adhesive member 29 may not be considered, and the press-fit portion 31 does not interfere with the mirror 18 even after the press-fitting. As a result, the distance measurement accuracy can be further improved.

Lengths of the mirror holding portions 32 are greater than a length of the press-fit portion 31, in a direction of the oscillation axis Ax (i.e., up-down direction in FIG. 3). As a result, an adhesive area between the holder 21 and the mirror 18 can be secured regardless of a press-fit length.

### (Second Embodiment)

A second embodiment is shown in FIG. 6. In second to eighth embodiments, shapes of holders are different. Thus, this aspect will be mainly described. A holder 22 has mirror contact portions 42 on outer edges of mirror holding portions 32 in the oscillation direction, in addition to mirror contact portions 41 provided on inner edges of the mirror holding portions 32 facing a press-fit portion 31. An adhesive member 29 is applied between the mirror contact portions 41 and 42, and the mirror 18 (not shown in FIG. 6 and other drawings) is fixed to the holder 22 via the adhesive member 29. The mirror contact portions 41 and 42 are formed at the same height and are in contact with the mirror 18 at their end surfaces. Since the mirror contact portions 42 are additionally provided on the outer edge of the mirror holding portions 32, deformation of the mirror 18 due to oscillation can be reduced. In addition, overflow of the adhesive member 29 outward of the mirror holding portions 32 in the oscillation direction can be prevented. In addition, the same effects as those of the above embodiments are exerted.

### (Third Embodiment)

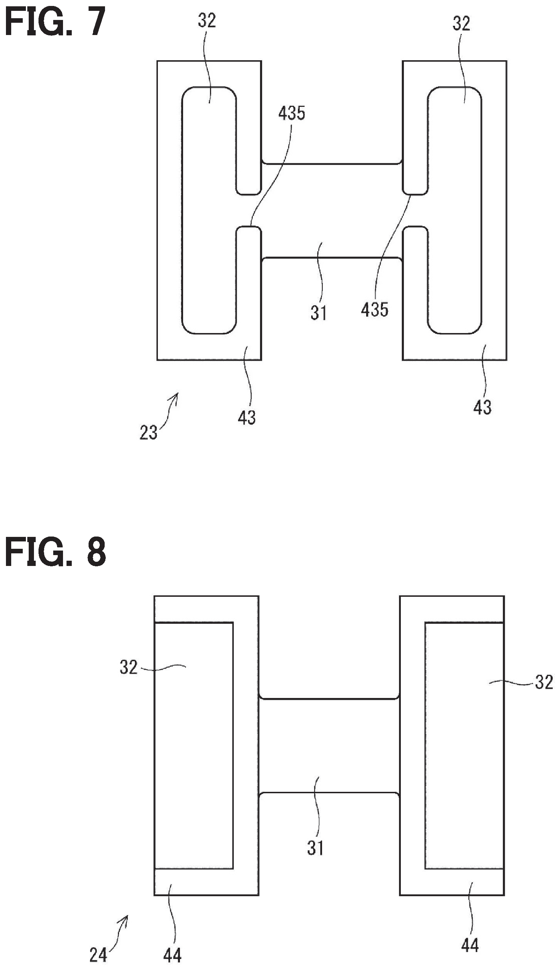

A third embodiment is shown in FIG. 7. A holder 23 has mirror contact portions 43 formed on mirror holding portions 32 of the holder 23. The mirror contact portions 43 are formed along an outer edges of the mirror holding portions 32. The adhesive member 29 is applied in inward regions surrounded by the mirror contact portions 43, and a mirror 18 is fixed to the holder 23 via the adhesive member 29. The holder 23 is in contact with the mirror 18 at end surfaces of the mirror contact portions 43. Since the mirror contact portions 43 are formed along the outer edges of the mirror holding portions 32, deformation of the mirror 18 due to oscillation can be reduced. In addition, overflow of the adhesive member 29 can be prevented by mirror contact portions 43.

The mirror contact portions 43 include openings 435. In the present embodiment, the openings 435 are defined on inner edges of the mirror holding portions 32 in the oscillation direction, and serve as air vents during adhesion and as relief portions when the adhesive member 29 expands due to heat or other factors. As a result, decrease in distance measurement accuracy due to temperature changes or other factors can be reduced. In addition, the same effects as those of the above embodiment are exerted.

### (Fourth Embodiment)

A fourth embodiment is shown in FIG. 8. A holder 24 has mirror contact portions 44 formed on mirror holding portions 32 of the holder 24. The mirror contact portions 44 are formed along inner edges of the mirror holding portions 32 facing a press-fit portion 31, and along both edges of the mirror holding portions 32 facing in the axial direction. The mirror contact portions 44 are open on outer edges of the mirror holding portions 32 in the oscillation direction. The adhesive member 29 is applied in regions surrounded by the mirror contact portions 44, and the mirror 18 is fixed to the holder 24 via the adhesive member 29. As a result, flowing of the adhesive member 29 toward the press-fit portion 31 can be prevented. In addition, deformation of the mirror 18 due to oscillation can be reduced. In addition, the same effects as those of the above embodiment are exerted.

### (Fifth Embodiment)

A fifth embodiment is shown in FIGS. 9 and 10. A holder 25 includes a press-fit portion 31 and a mirror holding portion 33, which are integrally formed. The mirror holding portion 33 has a substantially rectangular shape in planar view. The press-fit portion 31 protrudes away from the mirror 18 from the mirror holding portion 33. A length of the press-fit portion 31 is shorter, in the axial direction, than a length of the mirror holding portion 33, similarly to the above embodiments. A groove portion 312 is formed on a surface of the mirror holding portion 33 facing away from the mirror 18 so that the mirror 18 does not interfere with a spindle 13 inserted through the hole portion 311 of the press-fit portion 31.

Mirror contact portions 45 protrude from a mirror mounting surface of the holder 25 facing the mirror 18. The mirror contact portions 45 extend in the axial direction. The mirror contact portions 45 are provided outward of both edges of a projection region of the mirror mounting surface in the oscillation direction. The projection region is obtained by projecting the outline of the press-fit portion 31 to the mirror mounting surface. The adhesive member 29 is applied outward of the mirror contact portions 45, and the mirror 18 is fixed to the holder 25 via the adhesive member 29. The mirror 18 is in contact with the holder 25 at end surfaces of the mirror contact portions 45. In the present embodiment, the mirror 18 and the mirror holding portion 33 are spaced apart from each other in a region where the press-fit portion 31 faces the mirror 18. Even with this configuration, the same effects as those of the above embodiments can be achieved.

### (Sixth Embodiment)

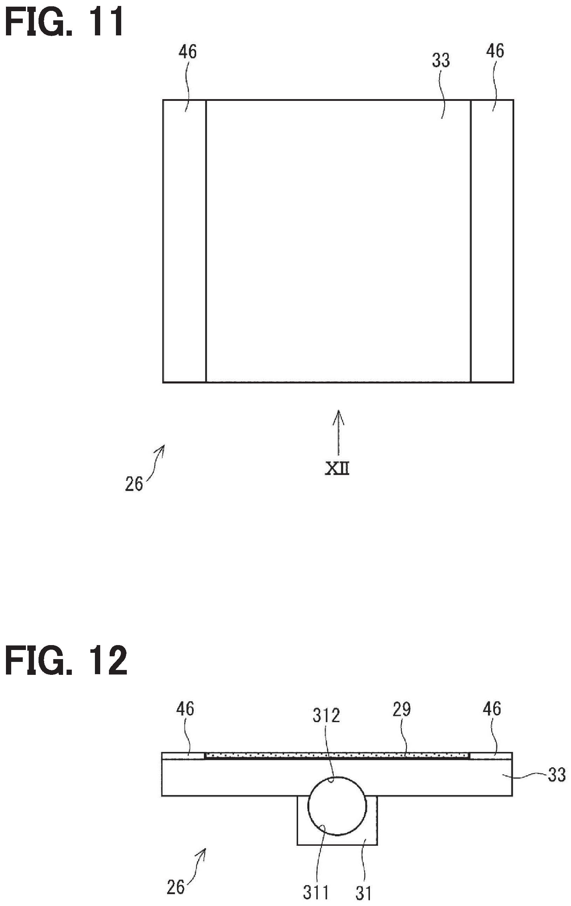

A sixth embodiment is shown in FIGS. 11 and 12. In the sixth embodiment, mirror contact portions 46 are formed on a holder 26. The mirror contact portions 46 protrude from outer edges of a mirror mounting surface of a mirror holding portion 33 facing outward in the oscillation direction. The adhesive member 29 is applied in a region between the mirror contact portions 46, and the mirror 18 is fixed to the holder 26 via the adhesive member 29. The mirror 18 is in contact with the holder 26 at end surfaces of the mirror contact portions 46. Since the mirror contact portions 46 are formed on the outer edges of the mirror mounting surface in the oscillation direction, deformation of the mirror 18 due to oscillation can be reduced. In addition, the same effects as those of the above embodiments are exerted.

### (Seventh Embodiment)

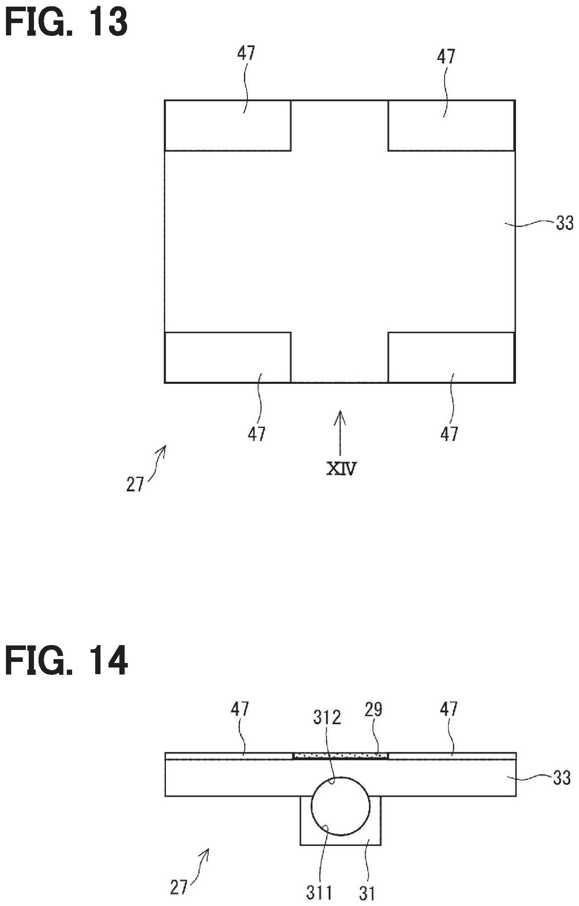

As shown in FIGS. 13 and 14, a holder 27 has mirror contact portions 47 in a seventh embodiment. The mirror contact portions 47 protrude from a mirror mounting surface of a mirror holding portion 33. The mirror contact portions 47 are formed at four locations positioned outward of a projection region of the mirror mounting surface in the oscillation direction, and extend along both edges of the mirror mounting surface facing in the axial direction (an upper edge and a lower edge in FIG. 13). The projection region of the mirror mounting surface is obtained by stretching the outline of the press-fit portion 31 in the axial direction and projecting the stretched outline to the mirror mounting surface. The adhesive member 29 is applied in a region of the mirror mounting surface where the mirror contact portions 47 are not formed, and the mirror 18 is fixed to the holder 27 via the adhesive member 29. The mirror 18 is in contact with the holder 27 at end surfaces of the mirror contact portions 47. Since the mirror contact portions 47 are formed on the outer edges of the mirror mounting surface in the axial direction, deformation of the mirror 18 due to vibrations caused by oscillation can be reduced. In addition, the same effects as those of the above embodiments are exerted.

### (Eighth Embodiment)

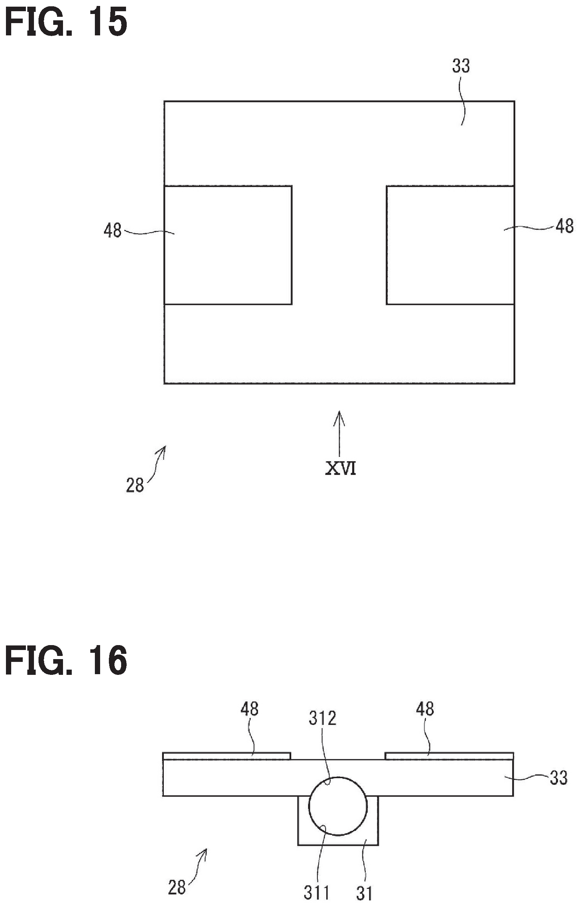

As shown in FIGS. 15 and 16, a holder 28 in an eighth embodiment includes mirror contact portions 48. The mirror contact portions 48 protrude from a mirror mounting surface of a mirror holding portion 33 and are located in an intermediate region of the mirror mounting surface in the axial direction. A press-fit portion 31 is located between locations of the mirror contact portions 48 in the oscillation direction. The adhesive member 29 is applied in a region of the mirror mounting surface where the mirror contact portions 48 are not formed, and the mirror 18 is fixed to the holder 28 via the adhesive member 29. The mirror 18 is in contact with the holder 28 at end surfaces of the mirror contact portions 48. Even with this configuration, the same effects as those of the above embodiments can be achieved. In FIG. 16, the adhesive member 29 is omitted in order to avoid complexity.

In the embodiments, the spindle 13 corresponds to an "oscillation shaft," the press-fit portion 31 to a "shaft holding portion," and the oscillation motor 50 to an "actuator".

### (Other Embodiments)

In the above embodiments, the mirror contact portions are formed at two or four locations of the mirror mounting surface of the holder. In other embodiments, shapes and number of the mirror contact portions may be different from those in the above embodiments.

In the above embodiments, the press-fit portion protrudes away from the mirror mounting surface. In other embodiments, a shape of the press-fit portion may be arbitrary. The press-fit portion may not protrude from the holder and the press-fit hole may pass through the holder, depending on a diameter of the spindle and a thickness of the holder. In this case, a projection region of the mirror mounting surface obtained by projecting the press-fit hole to the mirror mounting surface in a direction perpendicular to the oscillating axis may be referred to as a "shaft holding portion", and a region of the mirror mounting surface outward of the shaft holding portion may be referred to as a "mirror holding portion". The mirror contact portion may be formed at any location within the mirror holding portion.

In addition, shapes of the holder and the mirror may be different from those in the above embodiments. The holder and the mirror may be formed symmetrically with respect to the oscillation shaft in order to equalize inertia moments during oscillation. Furthermore, a configuration and arrangement of the oscillation motor and the mirror unit may be different from those in the above embodiments, as long as the mirror can oscillate.

The present disclosure is not limited to the above-described embodiments, and various modifications may be made within the scope of the present disclosure.

The present disclosure has been made in accordance with the embodiments. However, the present disclosure is not limited to such embodiments and configurations. The present disclosure also includes various modification examples and modifications within the scope of equivalents. In addition, various combinations and forms, and other combinations and forms which include only one element, more elements, or less elements are further included in the scope and the spirit of the present disclosure.

## Claims

1. A ranging device for measurement of a distance to an object by scanning an outside with light and detecting light reflected from the object, the ranging device comprising:
an oscillation shaft (13) driven by an actuator (50);
a mirror (18) driven and oscillated by the actuator to scan the outside with light;
a holder (21, 22, 23, 24, 25, 26, 27, 28) including a shaft holding portion (31) including a hole portion (311) into which the oscillation shaft is press-fitted; and
a mirror holding portion (32, 33) integrally formed with the shaft holding portion and adhered to the mirror via an adhesive member (29), wherein
the mirror holding portion includes a mirror contact portion (41, 42, 43, 44, 45, 46, 47, 48) that protrudes toward the mirror and is in contact with the mirror.

2. The ranging device according to claim 1, wherein
the shaft holding portion and the mirror holding portion are separated into different regions by the mirror contact portion (41, 44, 45), and
the mirror is adhered to the holder by the adhesive member applied on the mirror holding portion, and is spaced apart from the shaft holding portion.

3. The ranging device according to claim 1 or 2, wherein
the mirror holding portion is greater, in length in an axial direction where the oscillation shaft extends, than the shaft holding portion.
